**Europäisches Patentamt**

**European Patent Office**

**Office européen des brevets**

(19)

(11) Veröffentlichungsnummer : **0 647 376 B1**

(12) **EUROPÄISCHE PATENTSCHRIFT**

(45) Veröffentlichungstag der Patentschrift :
22.11.95 Patentblatt 95/47

(51) Int. Cl.$^6$ : **H04B 15/00, H04L 27/22**

(21) Anmeldenummer : **93912554.8**

(22) Anmeldetag : **03.06.93**

(86) Internationale Anmeldenummer :
**PCT/DE93/00476**

(87) Internationale Veröffentlichungsnummer :
**WO 94/00929 06.01.94 Gazette 94/02**

(54) **TAKTPHASENDETEKTOR.**

(30) Priorität : **25.06.92 DE 4220876**

(43) Veröffentlichungstag der Anmeldung :
**12.04.95 Patentblatt 95/15**

(45) Bekanntmachung des Hinweises auf die
Patenterteilung :
**22.11.95 Patentblatt 95/47**

(84) Benannte Vertragsstaaten :
**CH DE GB IT LI NL**

(56) Entgegenhaltungen :
**US-A- 4 831 637**
**US-A- 5 115 454**

(56) Entgegenhaltungen :
**IEEE TRANSACTIONS ON COMMUNICA-**
**TIONS, Vol. COM-34, Nr. 1, Januar 1986, New**
**York, F. M. GARDNER "A BPSK/QRSK Timing-**
**-Error Detector for Sampled Receivers", Sei-**
**ten 423-429,**

(73) Patentinhaber : **SIEMENS**
**AKTIENGESELLSCHAFT**
**Wittelsbacherplatz 2**
**D-80333 München (DE)**

(72) Erfinder : **LANKL, Berthold**
**Dietramszeller Platz 5**
**D-8000 München 70 (DE)**
Erfinder : **SEBALD, Georg**
**Mäuselweg 19**
**D-8000 München 70 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 647 376 B1

## Beschreibung

Die Erfindung bezieht sich auf einen Taktphasendetektor für synchrone Datenübertragung im Empfänger eines HF-Nachrichtenübertragungssystems, bei dem zur Gewinnung eines Taktphasenkriteriums bei jedem symbol aus dem Empfangssignal zwei benachbarte Hauptabtastwerte sowie ein weiterer, mittig zwischen diesen beiden liegender Zwischenabtastwert gebildet werden.

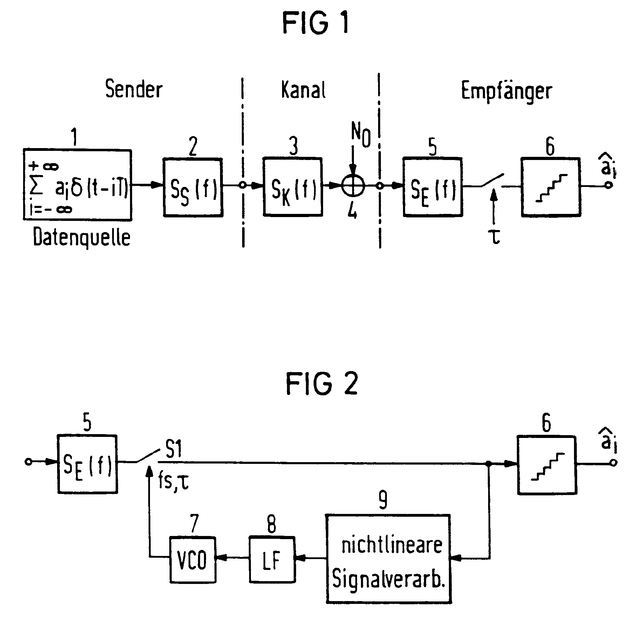

In einem Empfänger für synchrone Datenübertragung wird eine Taktsynchronisationsschaltung benötigt, um geeignete Abtastzeitpunkte für das Empfangssignal abzuleiten. Ein entsprechendes Systemmodell ist beispielhaft für ein PAM-System in Figur 1 dargestellt. Dabei wird sendeseitig das von der Datenquelle 1 gelieferte Signal noch einer mit 2 bezeichneten Pulsformung $S_s(f)$ unterzogen. Der Übertragungskanal 3 ist durch seine Übertragungsfunktion $S_K(f)$ und additives weißes gauß'sches Rauschen der Rauschleistungsdichte $N_o$ charakterisiert. Am Empfängereingang sitzt ein pulsformendes Filter $S_E(f)$ 5, dem über einen Abtaster ein Entscheider 6 nachgeschaltet ist. Im folgenden werden der empfangsseitige Grundimpuls g(t) o-• $S_S(f).S_E(f).T$ sowie auch der Empfangsimpuls h(t) o-• $S_S(f).S_K(f).S_E(f).T$ verwendet, die sich aus der jeweiligen Fourierrücktransformation ergeben. Danach erfolgt zu den Zeitpunkten $t = \tau + iT$ mit $\tau$ als Taktphase die Abtastung des Empfangssignals, an die sich die Entscheidung anschließt.

Eine Möglichkeit für die Ableitung eines geeigneten Taktsignals besteht darin, direkt aus dem Empfangssignal über nichtlineare Operationen (z.B. Quadrierung) die Grundschwingung der Taktfrequenz zu erzeugen, deren Nulldurchgänge die Abtastzeitpunkte festlegen. Der dabei auftretende Taktphasenjitter kann durch schmalbandige Filterung reduziert werden.

Eine andere Möglichkeit ist, aus dem bereits abgetasteten Empfangssignal über nichtlineare Operationen direkt ein Kriterium über die Taktphasenabweichung zu gewinnen, das über ein Schleifenfilter 8 auf den spannungsgesteuerten Oszillator (VCO) 7 einer Phasenregelschleife wirkt, welcher seinerseits den Abtasttakt zur Verfügung stellt. Ein Beispiel hierfür zeigt Figur 2. Um Einflüsse von Toleranzen, Temperatur, Alterung etc. möglichst gering zu halten, ist ein in Digitaltechnik implementiertes Taktphasenkriterium von Vorteil.

Ein solcher Taktphasendetektor ist in dem Aufsatz von F.M. Gardner "A BPSK/QPSK Timing-Error Detector for Sampled Receivers", IEEE Transactions on Communications, COM-34, Mai 1986, Seiten 423-429 beschrieben.

Dieser Phasendetektor wird an späterer Stelle noch näher erläutert.

Bei der Übertragung vielstufiger Datensignale wird die Anforderung an den nach der Filterung verbleibenden Taktphasenjitter mit der Modulationsstufenzahl immer größer. Die Filterbandbreite immer weiter zu verkleinern, ist dabei meist nicht möglich, da die Taktsynchronisationsschaltung kanalbedingten zeitvarianten Änderungen des optimalen Abtastzeitpunkts folgen muß.

Der Taktphasenjitter besteht aus mehreren Anteilen, nämlich dem sendeseitig bereits vorhandenen Jitter, dem durch Rauschen und Störungen empfangsseitig erzeugten Jitter sowie dem systematischen Taktphasenjitter, der von der empfangenen Datenfolge selbst erzeugt wird (Patternjitter). Dieser systematische Taktphasenjitter kann durch geeignete Vorfilterung $S_D(f)$ des Empfangssignals vor Ausführung der nichtlinearen Operation reduziert werden. Auf diese Weise können die dynamischen Eigenschaften (tracking) der Taktsynchronisationsschaltung unverändert bleiben und trotzdem der Jitteranteil reduziert werden. Eine geeignete Vorfilterung bedeutet im allgemeinen bei einer digitalen Realisierung einen beträchtlichen Filteraufwand.

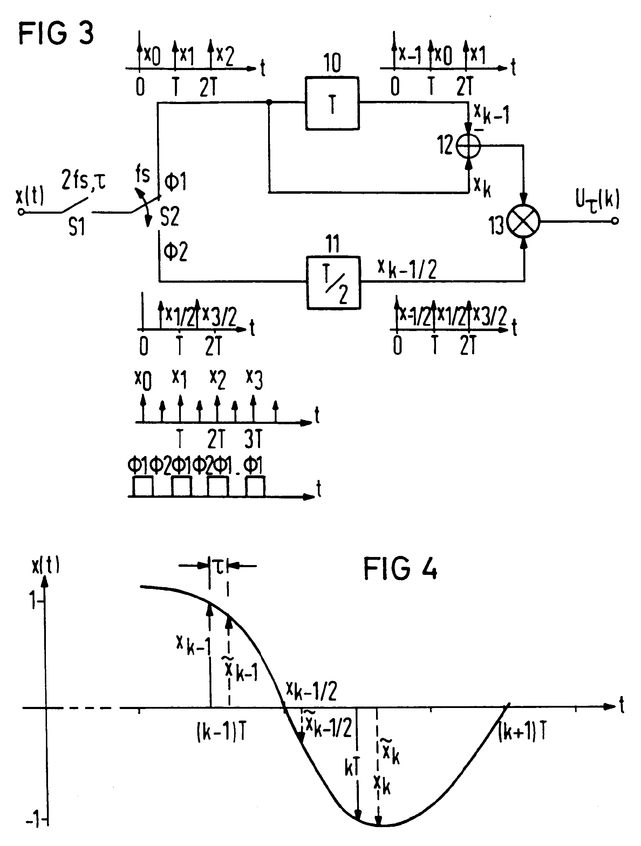

In dem Aufsatz "Kompensation des systematischen Jitters bei der Taktgewinnung aus Digitalsignalen" von K.Trödle, E.Lutz, J.Huber, R.Thomas, erschienen in Frequenz, Vol. 35, September 1981, Seiten 236-242 wird die Möglichkeit zur Kompensation der den systematischen Taktphasenjitter verursachenden Signalanteile angegeben. Ein ähnliches Verfahren kann bei dem von F.M.Gardner angegebenen Taktphasenkriterium angewandt werden, was im folgenden anhand der Figuren 3 und 4 erläutert wird.

Figur 3 zeigt einen Taktphasendetektor nach Gardner, der bei einer Schaltung gemäß Figur 2 anstelle der nichtlinearen Signalverarbeitung 9 in den Rückkopplungszweig eingefügt wird. Mit dem Ausgangssignal $U_\tau(k)$ des Phasendetektors wird der im Empfangszweig liegende Abtaster SI angesteuert. Der Phasendetektor besteht aus zwei Zweigen, denen eingangsseitig das Empfangssignal über einen Demultiplexer S2 wechselweise zugeführt wird und die ausgangsseitig an ein Multiplikationsglied 13 angeschlossen sind. Das Taktphasenkriterium nach Gardner benötigt zwei Signalabtastewerte je Symboldauer T. Diese beiden Abtastzeitpunkte kann man in einen Hauptabtastzeitpunkt, das ist der Zeitpunkt, zu dem auch die Datenentscheidung getroffen wird, und einen Zwischenabtastzeitpunkt einteilen. Zur Ermittlung der Taktphasenabweichung werden drei benachbarte Signalabtastwerte benötigt. Wie aus Figur 3 ersichtlich, werden dazu zwei benachbarte Hauptabtastwerte $x_{k-1}$, $x_k$ und der dazwischenliegende Zwischenabtastwert $x_{k-1/2}$ benutzt. In Figur 3 ist hierfür im einen Empfangssignalweg eine Aufteilung in zwei Zweige vorgesehen, die ausgangsseitig über ein Subtraktionsglied 12 miteinander verbunden sind und in deren einem ein Laufzeitglied 10 der Laufzeit T eingeschaltet ist. Im zweiten Signalweg des Taktphasendetektors für den Zwischenabtastwert ist ein Laufzeitglied T/2 11 eingeschaltet. Die jeweiligen Schaltzustände des Demultiplexers S2 sind mit $\phi_1$ und $\phi_2$ bezeichnet. In zugehörigen Diagrammen sind die Signalwerte $x_O$, $x_{1/2}$, $x_1$, $x_{3/2}$, $x_2$ ... als Funktionen der Zeit dargestellt und darunterliegend die betreffenden Schaltzustände eingezeichnet.

Es wird nun ein zweistufiges PAM-Signal betrachtet und dabei die Wirkungsweise des Taktphasendetektors anhand eines Diagramms nach Figur 4 erläutert, in dem der Verlauf des Empfangssignals x(t) in Abhängigkeit von der Zeit t aufgetragen ist. Die beiden Hauptabtastwerte liefern eine Aussage über die Steigung des Signalverlaufs zwischen diesen beiden Abtastwerten. Dies ist im Idealfall entweder eine positive Steigung, eine negative Steigung oder keine Steigung. In Figur 4 ist die Steigung des beispielhaften Signalverlaufs x(t) zwischen den Hauptabtastwerten $x_{k-1}$ und $x_k$ negativ. In Abhängigkeit von dieser Steigung wird nun die mittlere Abweichung des Zwischenabtastwertes $x_{k-1/2}$ bestimmt. Bei unverzerrtem symmetrischem Grundimpuls g(t) des zweistufigen PAM-Systems ist bei optimaler Taktphase diese mittlere Abweichung null. Bei einem späteren Abtastzeitpunkt, in Figur 4 ist dies für $\tilde{x}_{k-1}$ und $\tilde{x}_k$ der Fall, ist die mittlere Abweichung bei positiver Signalsteigung positiv, bei negativer Signalsteigung negativ. Bei einem früheren Taktzeitpunkt ist dies umgekehrt.

Aus dem Produkt der Signalsteilheit mit dem Zwischenabtastwert erhält man ein eindeutiges Taktphasenkriterium. Dieses von Gardner angegebene Kriterium lautet:

$$U_\tau(k) = x(\tau - T/2 + kT) \cdot [x(\tau + kT) - x(\tau - T + kT)] \quad (1)$$

mit

$$x(t) = \sum_{n=-\infty}^{\infty} a_n \cdot g(t - nT) \qquad a_i \in \left\{ -1, +1 \right\} \qquad (2)$$

Systematischer Taktphasenjitter entsteht nun bei dem betrachteten 2-stufigen PAM-System dadurch, daß der Zwischenabtastwert, auch bei einem Nyquistimpuls g(t), nicht nur von den beiden benachbarten Sendesymbolen (Hauptabtastwerten) abhängt, sondern auch von den übrigen Sendesymbolen $a_i$. Dies führt zu Abweichungen des Zwischenabtastwertes, die zwar im Mittel null sind, aber zu pattern-abhängigem Jitter führen.

Der Erfindung liegt die Aufgabe zugrunde, für einen Taktphasendetektor der eingangs beschriebenen Art eine Lösung zur Beseitigung dieses pattern-abhängigem Jitters anzugeben.

Diese Aufgabe wird gemäß der Erfindung dadurch gelöst, daß der systematische Phasenjitter, der als Folge der Abhängigkeit des Zwischenabtastwertes von den benachbarten Hauptabtastwerten sowie den übrigen Sendesymbolen entsteht, beseitigt wird durch Subtraktion der Einflüsse der beteiligten Sendesymbole von diesem Zwischenabtastwert mit Hilfe eines Transversalfilters, das im Signalweg der Hauptabtastwerte angeordnet ist und dessen Filterausgang mit einem Subtraktionsglied verbunden ist, dessen zweitem Eingang der Zwischenabtastwert zugeführt ist, und daß der Ausgang dieses Subtraktionsglieds und der Ausgang eines weiteren, die beiden dem Zwischenabtastwert benachbarten Hauptabtastwerte zusammenführenden Subtraktionsgliedes an ein Multiplizierglied geführt sind, dem das Taktphasenkriterium entnehmbar ist.

Bei einem Taktphasendetektor mit einem modifizierten Taktphasenkriterium werden entscheidungsrückgekoppelte Signalabtastwerte verwendet, die nach einem Entscheider abgeleitet und statt der Hauptabtastwerte des Empfangssignals benutzt werden. Hierzu wird auf die US-A-4,831,637 verwiesen, aus der es bekannt ist, bei einem Gerät zur Phasenjitterbeseitigung im mit Abtastung arbeitenden Nachrichtenempfänger rekursiv korrigierte Korrekturfaktoren einzusetzen.

Vorteilhafte Ausgestaltungen und Weiterbildungen des Erfindungsgegenstandes sind in den Unteransprüchen 3 und 4 angegeben.

Nachstehend wird die Erfindung anhand von in der Zeichnung dargestellten Ausführungsbeispielen näher erläutert.

Es zeigen:

Figur 5      einen modifizierten jitterreduzierten Taktphasendetektor,

Figur 6      einen modifizierten Taktphasendetektor unter Verwendung entscheidungsrückgekoppelter Signalabtastwerte,

Figur 7      einen modifizierten Taktphasendetektor für QAM-Systeme und

Figur 8      einen modifizierten Taktphasendetektor für QAM-Systeme unter Verwendung entscheidungsrückgekoppelter Signalabtastwerte.

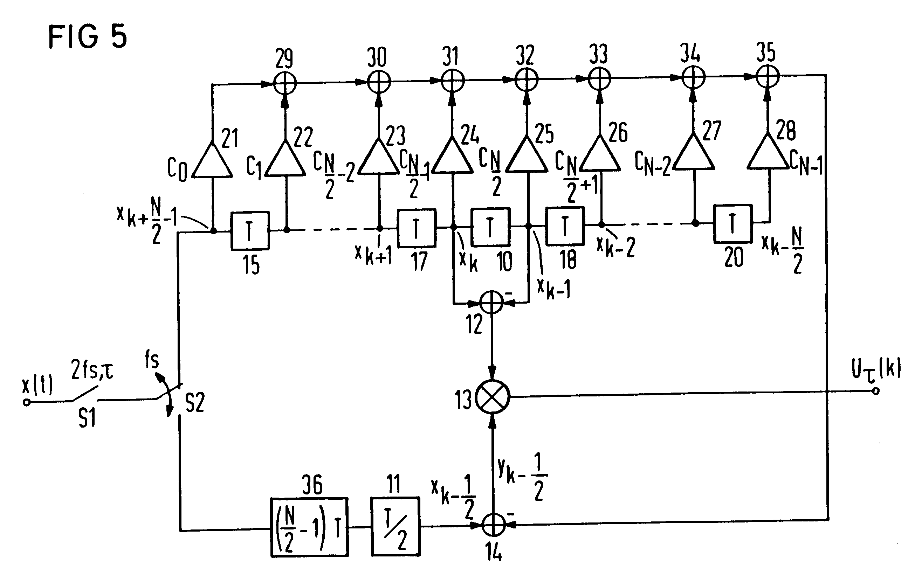

Figur 5 zeigt eine Schaltung, mit der der pattern-abhängige Jitter dadurch beseitigt wird, daß die Einflüsse der beteiligten Sendesymbole vom Zwischenabtastwert subtrahiert werden. Dies geschieht im folgenden mit Hilfe eines einfachen Transversalfilters, welches beispielhaft symmetrisch ausgeführt ist, was aber nicht dringend erforderlich ist. Dieses besteht aus den Laufzeitgliedern (Verzögerungsgliedern) 15 bis 20, die dem Laufzeitglied 10 im oberen Zweig von Figur 3 in Reihe geschaltet sind, sowie aus den Stellgliedern 21 bis 28 mit den N Koeffizienten $c_0 ... c_{N-1}$, die über Summierer 29 bis 35 zusammengeführt sind, deren gemeinsames Ausgangssignal einem Subtraktionsglied 14 zugeführt wird, an das zugleich das im unteren Zweig gemäß Figur 3 liegende Laufzeitglied 11 der Verzögerungszeit T/2 mit einem vorgeschalteten weiteren Laufzeitglied 36 mit der Verzögerungszeit (N/2-1) T angeschlossen ist. Der Ausgang des Subtraktionsgliedes 14 sowie des Subtraktionsgliedes 12, das mit dem Eingang und Ausgang des Laufzeitgliedes 10 im oberen Zweig der Schaltung verbunden ist, sind an einen Multiplizierer 13 angeschlossen, dessen Ausgang das Taktphasenkriterium $U_\tau(k)$ entnehmbar ist. Für das Regelziel $\tau = 0$ soll der Zwischenabtastwert mit Hilfe des Transversalfilters zu null gemacht werden. Die Impulsantwort des Transversalfilters mit N Koeffizienten ist:

$$c(t) = \sum_{n=0}^{N-1} c_n \cdot \delta(t-nT) \qquad (3)$$

Dabei sind $c_n$ die Koeffizienten des Transversalfilters. Für den modifizierten Zwischenabtastwert gilt damit:

$$y(-T/2) = \sum_{k=-\infty}^{\infty} a_k \cdot g(-T/2-kT) - $$

$$(4)$$

$$- \sum_{n=0}^{N-1} c_n \cdot x(-nT+(N/2-1)T)$$

Für ein unverzerrtes Signal ist der Zwischenabtastwert im Regelziel null. Damit ist auch der pattern-abhängige Jitter eliminiert. Dieses Verfahren ist genauso bei mehrstufigen PAM-Signalen anwendbar, bei denen eine Reduzierung des Jitters aufgrund der erhöhten Systemempfindlichkeit immer notwendiger wird.

Für das Empfangssignal x(t) einer vielstufigen M-PAM gilt:

$$x(t) = \sum_{k=-\infty}^{\infty} a_k \cdot h(t-kT) \qquad (5)$$

mit $a_k \in \{ -M+1, -M+3, ....., -3, -1, +1, +3, ..., M-1\}$ $h(t) = g(t) * s(t)$

Dabei ist s(t) die Impulsantwort der Kanalübertragungsfunktion $S_K(f)$. Die Impulsantwort der gesamten, sende- und empfangsseitigen, pulsformenden Filterung ist g(t).

Für das Taktphasenkriterium nach Gardner gilt:

$$U_\tau(k) = x(\tau - T/2 + kT) \cdot [x(\tau + kT) - x(\tau - T + kT)] \qquad (6)$$

Wird der Zwischenabtastwert mit Hilfe eines Transversalfilters mit N Koeffizienten von pattern-abhängigem Jitter befreit, so erhält man das der Erfindung zugrundeliegende modifizierte Taktphasenkriterium:

$$U_{\tau}(k) = \left[x(\tau + kT) - x(\tau - T + kT)\right].$$

$$\left[x(\tau - T/2 + kT) - \sum_{n=0}^{N-1} c_n \cdot x(-nT + (N/2-1)T)\right] \qquad (7)$$

Eine zusätzliche Verbesserung des Störabstandes, nämlich eine Vergrößerung der Detektorsteilheit, kann durch Verwendung von geschätzten Sendesymbolen $\hat{a}_i$ statt der Hauptabtastwerte des Empfangssignals $x_i$ erzielt werden. Dies ist dann von Bedeutung, wenn das Transversalfilter zur Jitterreduktion aus Aufwandsgründen nur eine begrenzte Länge hat.

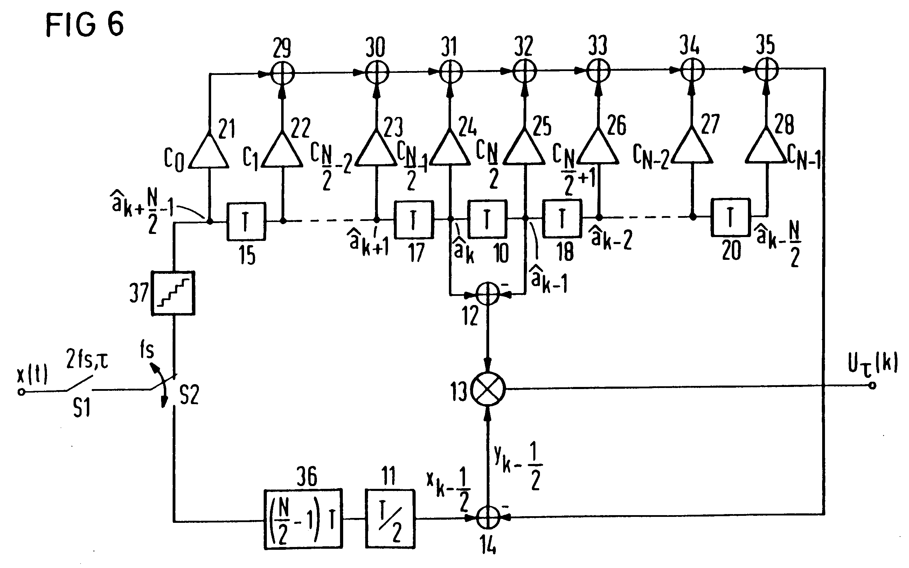

Figur 6 zeigt eine Schaltung für ein modifiziertes Taktphasenkriterium unter Verwendung entscheidungsrückgekoppelter Signalabtastwerte. Diese entspricht im wesentlichen der in Figur 5 dargestellten Schaltung. Unterschiedlich ist ein im oberen Leitungszweig eingefügter Entscheider 37 für die vielstufige PAM. Ferner liegen anstelle der Hauptabtastwerte des Empfangssignals $x_{K+N 2-1...}$, $x_{K-N/2}$ an den einzelnen Abgriffen der Laufzeitglieder 15 bis 20 geschätzte Sendesymbole $\hat{a}_{K+N/2-1} \ldots \hat{a}_{K-N/2}$ an.

Der vorstehend beschriebene Taktphasendetektor läßt sich in entsprechender Weise bei Quadraturamplituden-modulierten (QAM) Datensignalen einsetzen.

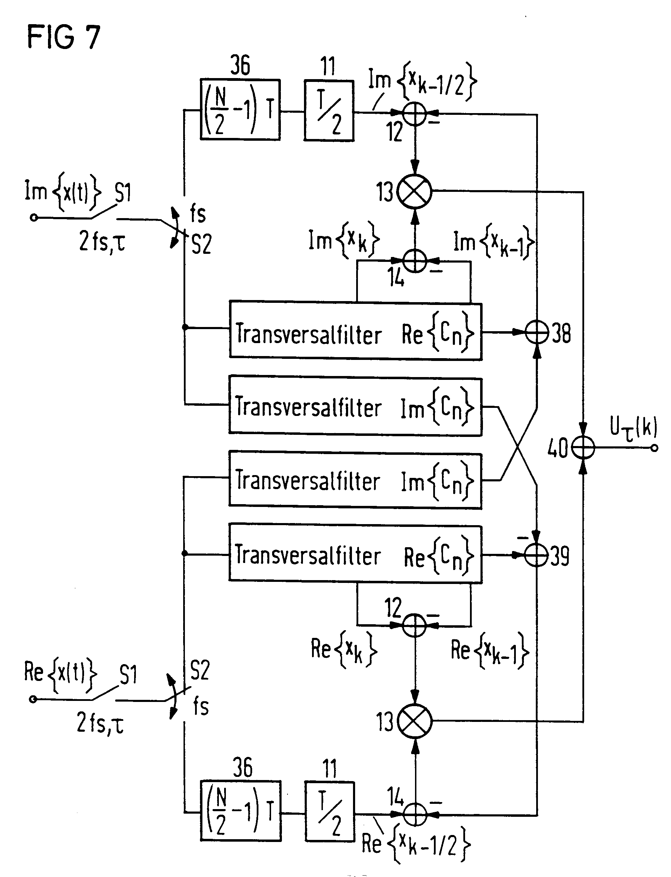

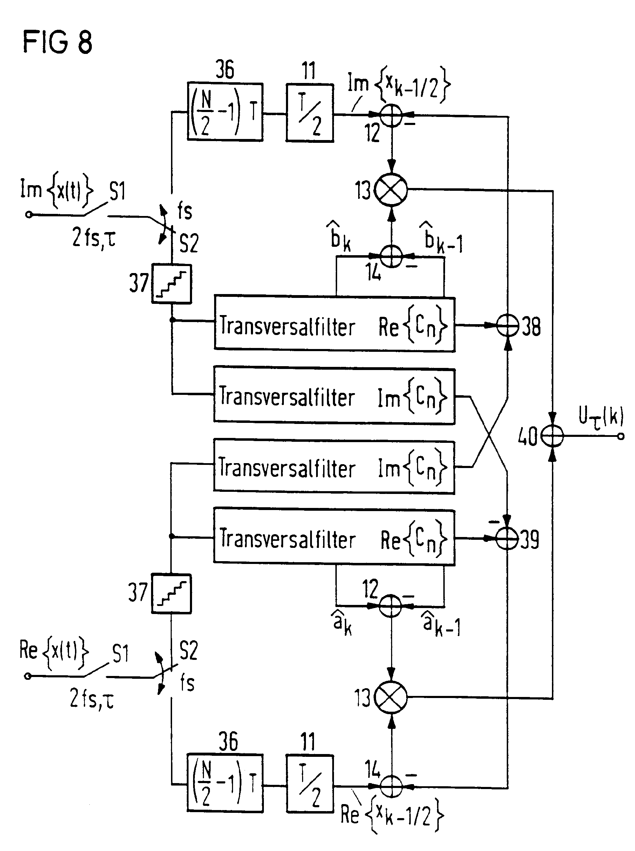

Die Vorgehensweise ist genauso wie im Fall der PAM. Um im Regelziel ($\tau = 0$) einen Zwischenabtastwert von 0 zu erhalten, wird ein Transversalfilter mit N (gerade) Koeffizienten verwendet, das bei der QAM-Übertragung im äquivalenten Tiefpaßbereich aus 4 Einzeltransversalfiltern besteht. Entsprechende Schaltungen sind in den Figuren 7 und 8 dargestellt, wobei Figur 7 eine Schaltung für ein modifiziertes Taktphasenkriterium für QAM-Systeme und Figur 8 eine Schaltung für ein modifiziertes Taktphasenkriterium für QAM-Systeme unter Verwendung entscheidungsrückgekoppelter Symbolschätzwerte zeigt. Beide Schaltungen sind analog aufgebaut zu denen nach den Figuren 5 und 6, jedoch sind entsprechend dem komplexen Aufbau jeweils Signaleingänge für den Realteil und den Imaginärteil vorgesehen, sowie in jeweils einem Zweig der Grundschaltung Transversalfilter für den Realteil und den Imaginärteil Diese sind so miteinander verkoppelt, daß das Transversalfilter für den Realteil des einen Zweiges und das Transversalfilter für den Imaginärteil des anderen Zweiges ausgangsseitig miteinander verbunden sind und umgekehrt. Gleichungsmäßig ergeben sich dieselben Ergebnisse wie im Fall der PAM, wobei hierbei jedoch die Transversalfilterkoeffizienten komplexwertig sind. Werden bei einem QAM-System beide Basisbandsignale (I- und Q-Kanal) für das Taktphasenkriterium verwendet, so ist der Taktphasendetektor unabhängig von der Trägerphase; außerdem ist der verbleibende systematische Taktphasenjitter um 3dB kleiner als bei Verwendung nur eines Basisbandanteils.

Entsprechend der PAM ist auch bei der QAM eine Verbesserung der Detektorsteilheit durch Verwendung entscheidungsrückgekoppelter Signalabtastwerte möglich. Eine solche Schaltung ist im Ausführungsbeispiel nach Figur 8 realisiert.

Ein Taktphasendetektor der oben beschriebenen Art wird beispielsweise in der Taktrückgewinnung des Demodulators eines Richtfunksystems verwendet, wobei das digitale Taktphasenkriterium in Form einer Tabelle in einem EPROM abgelegt wird. Das Tabellenverfahren für die Gewinnung des Taktphasenkriteriums hat den Vorteil, daß auch komplexere Signalverarbeitungsalgorithmen realisiert werden können.

## Patentansprüche

1. Taktphasendetektor für synchrone Datenübertragung im Empfänger eines HF-Nachrichtenübertragungssystems, bei dem zur Gewinnung eines Taktphasenkriteriums bei jedem Symbol aus dem Empfangssignal zwei benachbarte Hauptabtastwerte sowie ein weiterer, mittig zwischen diesen beiden liegender Zwischenabtastwert gebildet werden,
**dadurch gekennzeichnet,**
daß der systematische Phasenjitter, der als Folge der Abhangigkeit des Zwischenabtastwertes von den benachbarten Hauptabtastwerten sowie den übrigen Sendesymbolen entsteht, beseitigt wird durch Subtraktion der Einflüsse der beteiligten Sendesymbole von diesem Zwischenabtastwert mit Hilfe eines Transversalfilters (15 bis 20; 21 bis 28; 29 bis 35), das im Signalweg der Hauptabtastwerte angeordnet ist und dessen Filterausgang mit einem Subtraktionsglied (14) verbunden ist, dessen zweitem Eingang der Zwischenabtastwert zugeführt ist, und daß der Ausgang dieses Subtraktionsgliedes (14) und der Ausgang eines weiteren, die beiden dem Zwischenabtastwert benachbarten Hauptabtastwerte zusammenführenden Subtraktionsgliedes (12) an ein Multipliziergied (13) geführt sind, dem das Taktphasenkriterium entnehmbar ist.

2. Taktphasendetektor nach Anspruch 1,
   **gekennzeichnet durch,**
   ein modifiziertes Taktphasenkriterium unter Verwendung entscheidungsrückgekoppelter Signalabtastwerte die nach einem Entscheider (37) abgeleitet und statt der Hauptabtastwerte des Empfangssignals benutzt werden.

3. Taktphasendetektor nach Anspruch 1 oder 2,
   **dadurch gekennzeichnet,**
   daß bei seiner Verwendung für QAM-Systeme die Signalwege für den Realteil und den Imaginärteil des Signals entsprechend ausgebildet und miteinander verknüpft sind.

4. Taktphasendetektor nach einem der Ansprüche 1 bis 3,
   **gekennzeichnet durch**
   die Ablage eines digitalen Taktphasenkriteriums in Form einer Tabelle in einem EPROM.

## Claims

1. Clock phase detector for synchronous data transmission in the receiver of an RF information transmission system, in which two adjacent main samples and a further intermediate sample located centrally between these two are formed from the received signal for obtaining a clock phase criterion for each symbol, characterised in that the systematic phase jitter produced as a consequence of the dependence of the intermediate sample on the adjacent main samples and the remaining transmitted symbols is eliminated by subtracting the influences of the contributory transmitted symbols from this intermediate sample with the aid of a transversal filter (15 to 20; 21 to 28; 29 to 35) which is arranged in the signal path of the main samples and the filter output of which is connected to a subtraction element (14), the second input of which is supplied with the intermediate sample, and in that the output of this subtraction element (14) and the output of a further subtraction element (12) combining the two main samples adjacent to the intermediate sample are connected to a multiplier element (13) from which the clock phase criterion can be taken.

2. Clock phase detector according to Claim 1, characterised by a modified clock phase criterion, using signal samples with decision feedback, which samples are extracted after a discriminator (37) and are used instead of the main samples of the received signal.

3. Clock phase detector according to Claim 1 or 2, characterised in that for QAM systems the signal paths for the real part and for the imaginary part of the signal when it is used are correspondingly constructed and are logically combined with one another.

4. Clock phase detector according to one of Claims 1 to 3, characterised by a digital clock phase criterion being stored in the form of a table in an EPROM.

## Revendications

1. Détecteur de phase de cadence pour une transmission synchrone de données dans le récepteur d'un système de transmission d'informations haute fréquence, dans lequel deux valeurs d'échantillonnage principales voisines ainsi qu'une autre valeur d'échantillonnage intermédiaire au milieu des deux valeurs d'échantillonnage principales voisines sont formées à partir du signal de réception pour chaque symbole pour obtenir un critère de phase de cadence,
   caractérisé en ce que
   la gigue systématique de phase, qui apparaît du fait que la valeur d'échantillonnage intermédiaire dépend des valeurs d'échantillonnage principales voisines ainsi que des autres symboles d'émission, est supprimée par soustraction, de cette valeur d'échantillonnage intermédiaire, des influences des symboles d'émission intervenant, à l'aide d'un filtre transversal (15 à 20; 21 à 28; 29 à 35), qui est disposé dans la voie de signal des valeurs d'échantillonnage principales et dont la sortie est reliée à un élément (14) soustracteur, à la seconde entrée duquel est envoyée la valeur d'échantillonnage intermédiaire, et la sortie de cet élément (14) soustracteur et la sortie d'un autre élément (12) soustracteur rassemblant les deux valeurs d'échantillonnage principales voisines de la valeur d'échantillonnage intermédiaire sont reliées à un élément (13) multiplicateur, duquel peut être prélevé le critère de phase de cadence.

2. Détecteur de phase de cadence suivant la revendication 1,
caractérisé par
un critère de phase de cadence modifié par utilisation de valeurs d'échantillonnage de signal avec rétroaction de décision, qui sont obtenues à partir d'un élément de décision (37) et qui sont utilisées au lieu des valeurs d'échantillonnage principales du signal de réception.

3. Détecteur de phase de cadence suivant la revendication 1 ou 2,
caractérisé en ce que
si on l'utilise pour des systèmes de modulation d'amplitude en quadrature, les voies de signal pour la partie réelle et la partie imaginaire du signal sont formées de manière correspondante et sont combinées l'une à l'autre.

4. Détecteur de phase de cadence suivant l'une des revendications 1 à 3,
caractérisé par
l'enregistrement d'un critère numérique de phase de cadence sous forme d'un tableau dans une EPROM.

# FIG 1

Sender | Kanal | Empfänger

$$\begin{array}{c}1\\ \displaystyle\sum_{i=-\infty}^{+\infty} a_i \delta(t-iT)\end{array}$$

Datenquelle

$\overset{2}{S_S(f)}$

$\overset{3}{S_K(f)}$

$N_0$

4

$\overset{5}{S_E(f)}$

$\tau$

6

$\hat{a}_i$

# FIG 2

5

$S_E(f)$

S1

$f_s, \tau$

6

$\hat{a}_i$

7

VCO

8

LF

9

nichtlineare Signalverarb.

FIG 3

FIG 4

FIG 5

FIG 6

# FIG 7

# FIG 8